# EUROPEAN PATENT SPECIFICATION

(11) **EP 2 789 127 B1**
(45) Date of publication and mention of the grant of the patent: **26.07.2017**
(21) Application number: 12815812.8
(22) Date of filing: 07.12.2012
(51) Int. Cl.: H04L 12/24, H04L 12/26, H04L 12/40

(54) **SELF-LEARNING AUTOMOTIVE DATA LOGGER IDENTIFYING AUTOMOTIVE MESSAGES TRANSMITTED OVER A CAN BUS CONNECTING AUTOMOTIVE ELECTRONIC CONTROL UNITS**
SELBSTLERNENDER AUTOMOBILDATENLOGGER ZUR IDENTIFIZIERUNG VON AUTOMOBILNACHRICHTEN ÜBER EINE CAN-BUS-VERBINDUNG ZWISCHEN ELEKTRONISCHEN AUTOMOBILSTEUEREINHEITEN
ENREGISTREUR DE DONNÉES AUTOMOBILES À AUTO-APPRENTISSAGE IDENTIFIANT DES MESSAGES AUTOMOBILES TRANSMIS SUR UN BUS CAN RELIANT DES UNITÉS DE COMMANDE ÉLECTRONIQUE AUTOMOBILES

(30) Priority: 07.12.2011 IT TV20110173
(43) Date of publication of application: 15.10.2014
(73) Proprietor: Texa S.p.A., Monastier di Treviso (IT)
(72) Inventor: CAVALLI, Manuele, I-31056 Musestre Di Roncade (IT)
(74) Representative: Zamprogno, Bruno
(86) International application number: PCT/IB2012/057079
(87) International publication number: WO 2013/084205

(56) References cited:
- EP-A1- 1 820 684
- EP-A2- 1 251 432
- WO-A1-2005/064546

## Description

### TECHNICAL FIELD

The present invention relates to a self-learning automotive data logger configured to identify data packets, namely automotive messages, transmitted over a CAN bus connecting different automotive electronic control units; to a method for identifying automotive messages transmitted over a CAN bus connecting different automotive electronic control units by means of a self-learning automotive data logger; and the use of the self-learning automotive data logger.

### BACKGROUND ART

There are known automotive data acquisition and storage systems, especially for automotive diagnostic data, in which provision is made for connecting a datalogger to a diagnostic socket or connector external to a vehicle (such as a motor vehicle for example) to access, through said socket or connector, the automotive information contained in the automotive ECU (Electronic Control Units).

In latest-generation motor vehicles, access to the information/data held in the ECU is typically performed using the OBD (On Board Diagnostic) standard that, as is known, establishes both the communication protocols to be used to access the diagnostic data contained in each ECU of the vehicle (OBD protocols) and the association between each of the OBD protocols and the pin pairs of the vehicle's OBD connector through which the OBD protocol is performed. Specific dataloggers for the OBD standard have been produced for this purpose, hereinafter indicated as OBD dataloggers, which are configured to perform the various communication protocols included in the OBD standard through corresponding predetermined pin pairs of the OBD connector.

The acquisition process of automotive diagnostic data by the above-described OBD dataloggers is particularly slow when it is necessary to obtain certain automotive data almost instantaneously, i.e. with negligible delay with respect to the moment when the data acquisition request is submitted.

In fact, the data acquisition implemented by the OBD datalogger is carried out by implementing a polling procedure of the ECUs according to a predetermined sequential order, in which each ECU gives access to its data and generates a response only after receiving a data request message generated by the OBD datalogger. Obviously, the polling and the datalogger-ECU message interchange heavily delay the acquisition of diagnostic data by the datalogger, rendering the latter unsuitable for use in applications where it is necessary to obtain automotive data from one or more ECUs with negligible delay from the moment in which a certain event occurs, such as a road accident for example.

In addition, the above-described OBD dataloggers are particularly complex and expensive to manufacture as, on the one hand, they must be provided with a particularly large memory capable of storing the programs that control communications with the ECUs according to the OBD protocols, the set of programs that control the data acquisition and storage procedures, and a series of databases containing information for decoding the automotive data, and, on the other hand, they must be programmed on the basis of the motor vehicle on which they are to be installed and/or the type of data to be acquired. In fact, even though the OBD standard has defined a common platform of rules for the use of certain OBD protocols on specific pins of the OBD connector, it is known that margins of discretion exist up to now for the configuration of the association between the OBD protocols and the remaining free, unreserved pins of the connector. Therefore, OBD dataloggers are not currently able to acquire certain types of data on vehicles from different car manufacturers when the latter set the associations for the OBD protocols and free pins in the OBD connector differently from each other.

WO2005/064546 describes a method that stores the messages sent over a CAN bus. However, the method is not able to automatically establish the significance of the data contained in the messages circulating on the CAN bus.

EP 1 820 684 describes a method that classifies the messages generated by a monitoring system of the vehicle for delivering them to a user of a vehicle according to a given order of importance/priority.

The applicant has carried out in-depth research with the aim of identifying a solution that enables, in particular, achieving the objective of producing an automotive data logger that is capable of achieving the following objectives:
- it is universal, i.e. it is able to acquire any automotive data from any type of model of motor vehicle, independently of the manufacturer;
- it is able to able to perform self-learning, i.e. the automatic identification of the automotive messages to be acquired;
- it is extremely rapid in acquiring automotive messages when compared with the above-described traditional dataloggers;
- it is simple and inexpensive to manufacture.

### DISCLOSURE OF INVENTION

The object of the present invention is therefore that of providing a solution that enables achieving the above-indicated objectives.

The object of the present invention is achieved in so far as it relates to a self-learning automotive data logger and to a method for identifying automotive messages transmitted over a CAN bus connecting different automotive ECUs, as defined in the appended claims.

### BRIEF DESCRIPTION OF THE DRAWINGS

The present invention also relates to the use of a self-learning automotive data logger for identifying automotive messages transmitted over a CAN bus connecting different electronic control units as defined in claim 10.

The present invention will now be described with reference to the attached drawings, which illustrate a non-limitative embodiment, where:
- Figure 1 schematically shows a vehicle equipped with a CAN bus to which some ECUs and a self-learning automotive data logger, made according to the principles of the present invention, are connected;
- Figure 2 shows a block diagram of the self-learning automotive data logger shown in Figure 1;
- Figures 3 and 4 show an example of a list of encoded automotive messages read by the self-learning automotive data logger in a first and in a second operating state, respectively;
- Figure 5 shows an example of the fields of the automotive message identified in the self-learning step and stored in a database;
- Figure 6 shows an example of the automotive messages stored in a database during a monitoring procedure; and
- Figure 7 is a flowchart of the operations implemented by the self-learning automotive data logger.

### BEST MODE FOR CARRYING OUT THE INVENTION

The present invention will now be described in detail with reference to the attached figures to allow an expert in the field to embody and use it. Various modifications to the described embodiments will be immediately obvious to experts in the field, and the generic principles described herein can be applied to other embodiments and applications without, however, leaving the scope of protection of the present invention, as defined in the appended claims. Thus, the present invention is not intended to be limited to the embodiments shown herein, but is to be accorded the widest scope consistent with the principles and features disclosed and claimed herein.

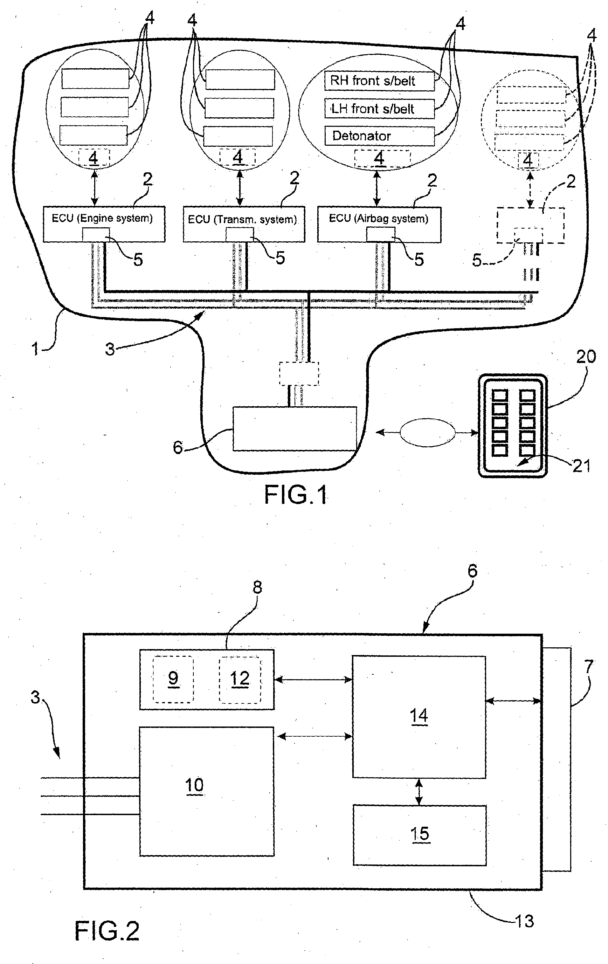

With reference to Figure 1, reference number 1 schematically indicates, as a whole, a vehicle, such as, for example, a motor vehicle or any similar vehicle, comprising a plurality of electronic control units 2 (ECUs), which are interconnected by means of one or more CAN buses 3 (only one of which is shown for descriptive clarity), are each associated with an automotive unit or system, and are configured to control and/or monitor and/or govern its operation, and/or receive information on/from one or more automotive devices 4 present in the automotive system.

In the example shown in Figure 1, each electronic control unit 2 (ECU) is configured to supply/receive electrical signals to/from the automotive devices 4 comprised in the automotive system, which may correspond, for example, to the instrument panel, engine system, braking system, suspension system, transmission system, airbag system, safety system, electric door-lock system, window control system, or any other type of electrical/electronic unit/system present on the vehicle 1.

According to a preferred embodiment, each electronic control unit 2 (ECU) may be configured to receive electrical signals regarding the operating status of the automotive device 4. To this end, the electronic control unit 2 (ECU) may receive electrical signals from measurement sensors/devices (not shown) present on the automotive device 4. By way of example, the electronic control unit 2 associated with the "airbag" automotive system could be configured to receive electrical signals indicative of the operating status of the automotive device 4 corresponding to the "vehicle driver seat/safety belt anchor device" or the "vehicle passenger seat/safety belt anchor device", both belonging to the airbag system.

According to a preferred embodiment, each electronic control unit 2 (ECU) could be configured to supply electrical control signals to one or more electric/electronic components present on the automotive device 4. For example, the electronic control unit 2 (ECU) associated with the automotive system corresponding to the "instrument panel" is able to supply an on/off control signal to the right or left direction indicators on the instrument panel.

The automotive devices 4 comprised in the automotive systems on board the vehicle 1 and communicating/controlled with/by the electronic control units 2 are known and therefore will not be further described.

With regard to the electronic control units 2, these are known devices and will therefore not be further described, other than specifying that they comprise respective CAN microcontrollers 5 configured to transmit automotive messages containing information regarding the operation of the automotive devices 4 over one or more CAN buses 3.

The CAN microcontrollers 5 are, instead, configured to operate in accordance with the CAN protocol, which being known will not be further described, other than specifying that it is able to support data transfer over a CAN bus at predetermined transmission speeds, namely at bit rates in the order of Mb/s, for example 1Mb/s, or in the order of Kb/s, -for example 125b/s, and covers two of the seven layers of the ISO Open Systems Interconnection (OSI) model, namely the physical layer and the data link layer. The data link layer of the CAN protocol is such that each electronic control unit 2 is able to transmit and receive data. Data is transmitted over the CAN bus 3 in the form of automotive messages having a specific format and variable length. As soon as the CAN bus 3 is free, each electronic control unit 2 is able to transmit, in the so-called free-running mode, an automotive message containing information about the operation of the automotive device(s) 4 that are able to exchange information with the electronic control unit 2 in question.

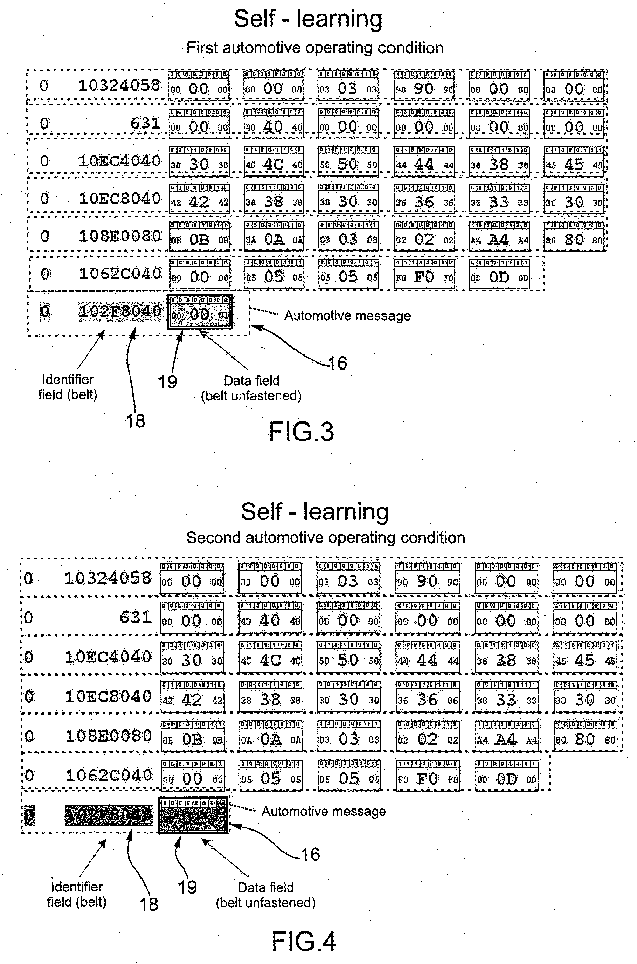

As shown in the examples in Figures 3 and 4, a CAN automotive message is formed by a plurality of bits subdivided into a series of fields ordered in a predetermined manner, such as, in particular: a frame start field and an end message field that enable the start and end of the message to be determined, an identifier field (IDE), a data field comprising a maximum of eight bytes and a series of further control and identification fields that, not being of use for understanding the present invention, will not be further described. In particular, the identifier field enables the relevant automotive device 4 to be identified, while the data field contains information regarding the operation of the automotive device 4.

With reference to Figure 1, reference numeral 6 indicates a self-learning automotive data logger, which is connected to at least one CAN bus 3 and is configured to recognize, i.e. identify, the content of the automotive messages that are generated, i.e. transmitted, over the CAN bus 3 by the electronic control units 2, and are associated with the operation/status of the automotive devices 4. The identification of an automotive message by the self-learning automotive data logger 6 relates, on the one hand, in identifying the automotive device 4 associated with the message on the basis of the identifier field and, on the other, in determining the operation of the automotive device 4 based on the data field, both fields being contained in the automotive message read.

According to a preferred embodiment, the self-learning automotive data logger 6 is configured to: read the automotive messages transmitted over the CAN bus 3, in a first automotive operating condition, in which a determined automotive device 4 to be identified is in a first determined operating state, while the remaining automotive devices 4 operate according to their corresponding operating states; read the automotive messages transmitted over the CAN bus 3 in a second automotive operating condition, in which the determined automotive device 4 to be identified has passed to a second predefined operating state, while the operating states of the remaining automotive devices 4 have remained unchanged with respect to the first automotive operating condition; determine, on the basis of the automotive messages read in the first and in the second automotive operating conditions, an automotive message having a data field that has changed between the first and the second automotive operating condition; and associate the determined automotive message with the predefined automotive device 4.

In particular, the extended identifier field contained in the identified automotive message contains information regarding the identified determined automotive device 4 that has caused the state transition; the data field of the identified automotive message contains information regarding the operation of the automotive device 4 identified in the second predefined operating state; the data field of the identified message read in the first automotive operating condition contains information regarding the operation of the determined automotive device 4 in the first determined operating state.

According to a preferred embodiment, the self-learning automotive data logger 6 is further configured to communicate information to a user regarding both the determined automotive device 4 to operate, and the operation/action to perform on it to cause the automotive device 4 to pass from the first to the second operating state so as to cause passage from the first to the second automotive operating condition. To this end, the self-learning automotive data logger 6 can be equipped with user interface means 7 able to generate information in a visual and/or acoustic or similar format indicating the operation/action to be carried out on the predetermined automotive device 4 to cause transition of the latter from the first to the second predefined operating state.

According to a preferred embodiment, the self-learning automotive data logger 6 could also be configured to store information regarding the previously identified automotive message in a memory unit 8. In particular, the self-learning automotive data logger 6 colud be configured to build a database 9 containing one or more identified messages, in which each identified message is unambiguously associated with the operation of an identified automotive device 4 in the first or the second automotive operating conditions.

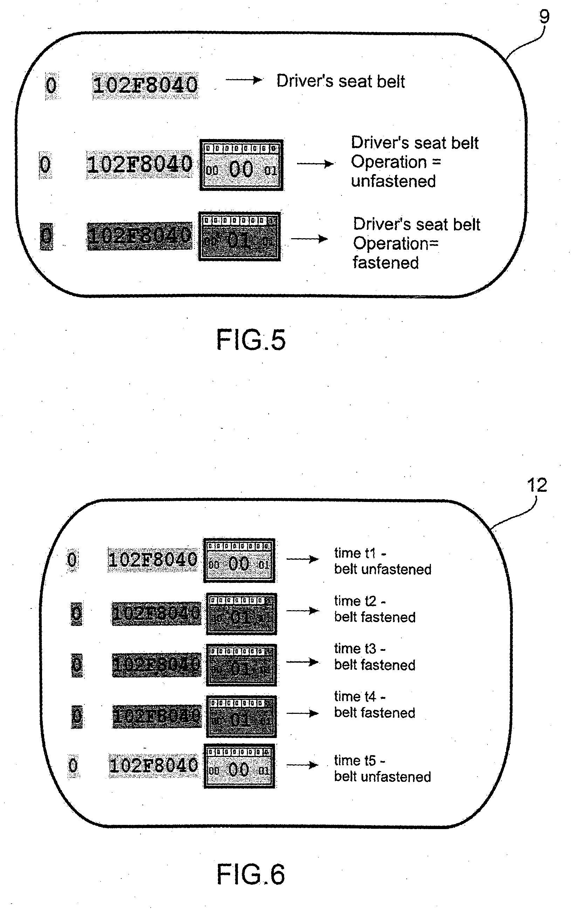

Preferably, with reference to Figure 5, each identified automotive message contained in the database 9 is encoded to include, for example, the identifier field indicating the automotive device 4, the data field indicating the operation of the automotive device 4 in the first operating condition and the data field indicating the operation of the automotive device 4 in the second operating condition.

Preferably, the self-learning automotive data logger 6 could be further configured to repeat, in a sequential, ordered and cyclic manner, the operations carried out for the above-described identification of the automotive messages associated with a plurality of automotive devices 4, in which, during each identification, the self-learning automotive data logger 6 reads the automotive messages in both the first operating condition and in the second automotive operating condition, so as to be able to identify the automotive messages on the basis of the transition of the bits in the data field of the identified automotive message.

The self-learning automotive data logger 6 can also be conveniently configured such that after the identification of one or more automotive messages, or rather after the self-learning step, it reads the automotive messages transmitted over the CAN bus 3, differentiates one or more automotive messages identified in the self-learning step from the automotive messages read and stores them in a database 12 of the memory unit 11. The automotive messages stored in the database 12 can be subsequently processed to govern/monitor the operation of one or more automotive devices 4 and to supply information on their state of use/operation.

With reference to the example shown in Figure 6, the self-learning automotive data logger 6 is advantageously configured to store the automotive messages identified during self-learning and associated with one or more automotive devices 4, on the basis of a data-acquisition schedule to be followed during a monitoring procedure on the operation of the vehicle 1. For example, during the monitoring procedure, the self-learning automotive data logger 6 stores the automotive messages associated with one or more determined automotive devices 4 at determined time intervals (t1-t5 in Figure 6), and/or after an automotive event has been determined. To this end, the self-learning automotive data logger 6 could be configured to detect/determine a determined automotive event on the basis of determining a change in the operating state of one or more determined automotive devices 4 and/or on the basis of a change in a quantity measured by a sensor system (not shown). For example, the self-learning automotive data logger 6 could determine an event associated with a road accident when a change in the status of the airbag is detected, and/or on the basis of a change in acceleration/speed opportunely measured by accelerometers etc. It is opportune to underline that in this case, thanks to the direct reading of the automotive messages transmitted over the CAN bus 3, the self-learning automotive data logger 6 is able to detect an "accident" event almost instantaneously and can concomitantly store the automotive messages containing information on the operating state of one or more predetermined automotive devices 4 with a negligible delay with respect to the event happening. In other words, thanks to the acquisition of automotive messages directly on the CAN bus 3, the self-learning automotive data logger 6 is no longer subject to the waiting times caused by transmission/reception procedures and protocols for signals containing a request/reply, as contemplated in the communications effected by the electronic control units 2, but is able to acquire the automotive messages almost in real time, thereby allowing reconstruction of the operating state of one or more automotive devices 4 exactly at the moment when the event, such as a road accident for example, occurred.

According to a preferred embodiment, the self-learning automotive data logger 6, is also configured to generate/supply/write, upon command, a previously identified/self-learnt automotive message on the CAN bus 3 to make an electronic control unit 2, upon reception of this automotive message and on the basis of the latter, control the automotive device 4 associated with the identification field of the received automotive message to make it operate according to the operation encoded in the data field of the automotive message.

To this end, the self-learning automotive data logger 6 could be advantageously configured to receive the above-described command from a user control device 20 via, for example, a wireless communications system. The user control device 20 could comprise a user control interface 21 configured to enable the user to send at least one control command for an automotive device 4 to the self-learning automotive data logger 6. For example, the control command could comprise a headlights on/off command and/or a close vehicle windows command and/or an alarm switch-off command, etc. The user control device 20 could comprise any user device capable of performing wireless communications. Preferably, the user control device 20 could comprise a portable device equipped with a wireless communications module such as, for example, a mobile phone, a smart phone or any similar wireless device that is equipped with a user control interface and is able to communicate wirelessly with other electronic devices.

Figure 2 schematically shows a preferred embodiment of the self-learning automotive data logger 6, which comprise a first computing unit 10, for example a CAN microcontroller connectable to at least one CAN bus 3 by pins (not shown), to read the data transmitted over the CAN bus 3. It should be specified that the self-learning automotive data logger 6 could be connected directly to the free terminals of the CAN bus 3 on the vehicle by opportune electrical wires/connection cables and/or to the pins of the CAN bus 3 on the OBD diagnostic socket (not shown).

The self-learning automotive data logger 6 further comprises the memory unit 8 to store the database 9 containing the identified/self-learnt automotive messages and the associations between the latter and the corresponding operating modes of the identified automotive devices 4, and the database 12 containing the automotive messages acquired during the monitoring of the vehicle, for example, at predetermined time intervals or after the detection of a predetermined event.

The self-learning automotive data logger 6 can also be conveniently provided with user interface means 7, which according to a preferred embodiment could comprise a synthesizer device (voice message generator module) and/or a display device (for example, a screen), which are configured to communicate voice/sound or visual messages, respectively, to the user that indicate, during the self-learning step, the automotive device 4 to operate and the action to be performed to cause the change/transition of the bits contained in the data field of the message to be identified.

The self-learning automotive data logger 6 could also be provided with an electronic control module 14, which is configured to control/dialogue with the remaining devices/means and units of the self-learning data logger 6 whilst performing the self-learning step and/or whilst monitoring.

The self-learning automotive data logger 6 can also be preferably, but not necessarily, provided with wireless communication units/means 15, of known type and therefore not described in detail, to receive user commands from an external/remote device/apparatus and/or to transmit the messages identified during the self-learning step and/or the messages acquired during the monitoring procedure to external/remote electronic devices such as, for example, the user control device 20.

The self-learning automotive data logger 6 could be provided with an outer protective box frame 13, having for example a parallelepipedal shape, to house the above-described units/means and/or to integrate the user interface means 7 on an outer surface. Thanks to the miniaturization of the above-described units/means, the box frame 13 has a very small size, for example, an external width of between 5 and 10 centimetres and a length in the order of a couple of centimetres.

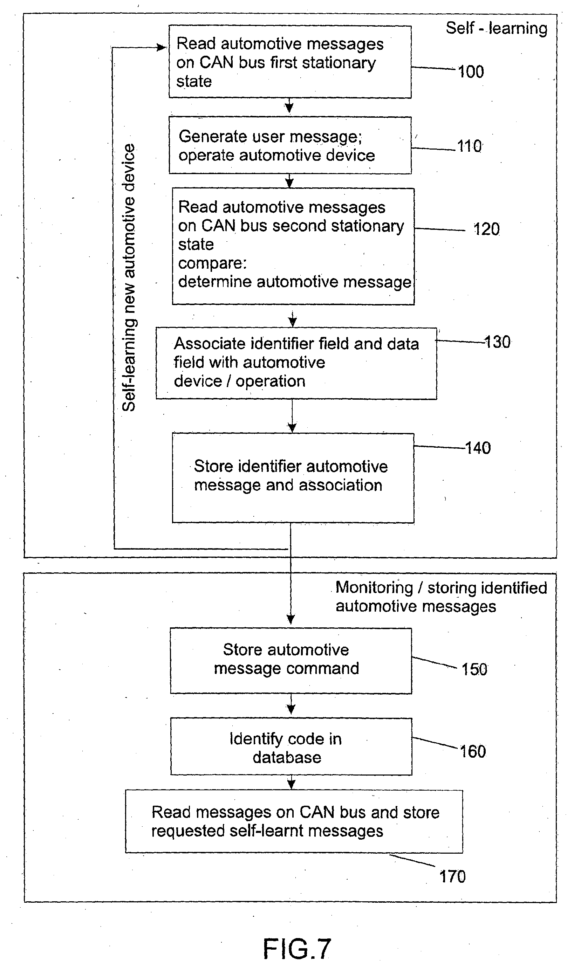

Figure 7 shows a flowchart containing a possible example of the operations performed by the above-described self-learning automotive data logger 6 during the self-learning step and during a monitoring step.

In the initial step, the self-learning automotive data logger 6 preferably, but not necessarily, checks whether the automotive devices 4 are in a stationary operating state. In particular, the self-learning automotive data logger 6 detects/determines the stationary operating state of the automotive devices 4 based on reading/analysis of the automotive messages transmitted over the CAN bus 3. For example, the stationary operating state is detected/determined when the bits in the read automotive messages remain substantially unchanged for a certain period of time.

After checking that the first stationary operating state has been reached, the self-learning automotive data logger 6 starts reading the messages transmitted over the CAN bus 3 (Block 100).

Successively (Block 110), the self-learning automotive data logger 6 preferably sends a communication to the user, via the user interface means 7, to indicate the action that the user must perform to cause transition of the automotive device 4 from the first to the second operating state. Preferably, the communication generated by the user interface means 7 comprises information regarding the action that the user must perform on the automotive device 4 to make it change to the second state. To simplify understanding of the present invention, and purely by way of example, if the automotive message to be identified concerns the vehicle driver's seat/safety belt operating in the latched state, the communication generated by the user interface means 4 will include the message: "fasten driver seat/safety belt to corresponding buckle". In this case, the user will fasten the seat/safety belt on the driver's side to the corresponding anchorage point (the buckle).

Successively (Block 120), the self-learning automotive data logger 6 starts reading the automotive messages transmitted over the CAN bus 3 in the second state and compares them with the automotive messages previously read in the first stationary state to determine, on the basis of the comparison, the automotive message in which the bits in the data field have undergone a change. To simplify understanding of the present invention, by way of example, Figures 3 and 4 show a series of automotive messages read on the CAN bus 3 during the first and second stationary states, respectively, where reference numeral 16 indicates the message associated with the seat/safety belt on the driver's side and reference numerals 18 and 19 respectively indicated the identifier field and the data field. In this case, the self-learning data logger 6 detects the change in the bits of the field 19 (which passes from 00 to 01) of the automotive message acquired in the second operating state.

Successively (Block 130), the self-learning data logger 6 associates the configuration of the bits in the identifier field of the identified automotive message with the operated automotive device 4 (in the example, the seat/safety belt on the driver's side) and associates the configuration of the bits in the data field with the predetermined operation of the automotive device 4 (in the example, the fastening of the seat/safety belt on the driver's side). Advantageously, the self-learning data logger 6 associates the configuration of the bits in the data field of the identified message read in the first stationary state to a different predetermined operation of the automotive device 4 (in the example, the unfastening of the seat/safety belt on the driver's side).

The self-learning data logger 6 stores the identified message in the database 9, associating it with the operation of the identified automotive device 4 (automotive message - seat belt fastened) (Figure 5) (Block 140 - Figure 7).

The above-described self-learning procedure can terminate or be repeated for any other automotive device 4 to be identified, by implementing the above-described steps again.

Preferably, the self-learning step can be repeated a predetermined number of times for the same operation of an automotive device 4 in order to perform an extra check on the correct identification of the automotive message.

The monitoring procedure on the operation of one or more automotive devices 4 for which the corresponding automotive messages have been identified may begin/start on the basis of a command issued by the user via the user interface means 7 and/or on the basis of an external command generated by an external user control device 20 (Block 150).

Preferably, the monitoring procedure could include the step of identifying, in the database 9 (Block 160), the identification code of the automotive message associated with the automotive device 4 to be monitored.

At this point, the self-learning automotive data logger 6 reads the automotive messages transmitted over the CAN bus 3 and stores the automotive messages associated with the selected automotive device 4 in the database 12 at predetermined time intervals, i.e. cyclically in a data buffer, or upon command, i.e. on the basis of a detected event, for example in the case of an accident, (Figure 6) (Block 170 - Figure 7).

The automotive messages stored in the self-learning automotive data logger 6 could be transmitted to external/remote computing units (for example, to the user control device 20), which then process the automotive messages to determine data/information regarding the operation of one or more automotive devices 4.

Regarding that described above, it should be specified that the self-learning automotive data logger 6 is preferably configured to receive a user command from an external/remote computing unit, for example from the user control device 20, indicating the automotive device 4 to operate and the type of operation to be performed on it. The self-learning automotive data logger 6 determines, through the database 9, the automotive message associated with the operation of the automotive device 4 to be governed and writes/generates the given automotive message on the CAN bus 3. The electronic control unit 2 associated with the automotive device 4 to be governed receives the automotive message and executes it to cause the automotive device 4 to operate according to the user command.

Regarding that described above, it should also be specified that the self-learning automotive data logger 6 is configured to: store the identified messages in order to build an internal configuration table through which the automotive data logger is able to automatically perform both the continuous monitoring of all the operating states of the automotive devices associated with the identified automotive messages included in the table, and the transmission of alarm signals to an external electronic unit/system when the automotive data logger detects a given transition of a monitored automotive message.

The datalogger is extremely simple to use, both in the configuration phase for the messages to store, thanks to self-learning, and in the phase of storing the messages. In particular, the self-learning step can be conveniently carried out by anyone, as all that is required is just the straightforward execution of simple actions indicated each time to the user by the datalogger.

Furthermore, the datalogger is extremely fast in storing the messages requested by the user as they are read directly on the CAN bus. The datalogger's high message acquisition and storage speeds enables using the latter in applications that require almost instantaneous analysis of the operating condition of one or more automotive devices 4 when a predetermined event, such as a road accident, occurs. In such applications, the operating condition is, for example, typically requested for the seat belts and/or the indicators etc.

In addition, by being connected directly to the CAN bus and at the same time operating on the physical/data exchange layers of the CAN protocol, the datalogger is able to advantageously operate on any type of vehicle independently of model type.

Finally, the datalogger is extremely simple and inexpensive to produce as it performs the mere function of passively reading data transmitted over a CAN network and comparing it, without the need to actively dialogue "at high level" with the electronic control units of the vehicle to obtain information on the operation/diagnostics of the automotive devices to be monitored.

Finally, it is clear that modifications and variants can be made to the automotive data logger described and illustrated above without leaving the scope of protection of the invention defined in the appended claims.

## Claims

1. A self-learning automotive data logger (6) configured to identify the content of automotive messages transmitted over a least one CAN bus (3) connecting at least two automotive electronic control units (2) associated with respective automotive systems present on the vehicle (1) comprising at least one automotive device (4);
said self-learning automotive data logger (6) being designed to be connected to said CAN bus (3) and comprising:
- user interface means (7) designed to generate information to the user;
said self-learning automotive data logger (6) being configured to:
- read, on the CAN bus (3), the automotive messages generated by said automotive electronic control units (2) and transmitted over the CAN bus (3);
- detect, amongst the read automotive messages, an automotive message that has changed due to a determined transition in the operating status of an automotive device (4); and
- identify the content of the detected automotive message so as to self-learn said content, on the basis of the change in the automotive message and the operating states of the said automotive device (4) during said transition;
said self-learning automotive data logger being **characterized in that** it is further configured to:
- read the automotive messages transmitted over said CAN bus (3) in a first automotive operating condition, wherein said predefined automotive device (4) is in a first predefined operating state, while the remaining automotive devices (4) operate in corresponding predefined operating states;
- communicate to a user, by said user interface means (7), a predefined action that user has to carry out on said predefined automotive device (4) to cause the predefined automotive device (4) to pass from the first operating state to a second operating state;
- read the automotive messages transmitted over the CAN bus (3) in a second automotive operating condition, wherein the predefined automotive device (4) has passed to a second predefined operating state due to the user action, while the operating states of the remaining automotive devices (4) have remained unchanged with respect to said first automotive operating condition;
- determine, from amongst the automotive messages read in the first and the second automotive operating conditions, an automotive message having a data field found to have changed during the transition from the first to the second automotive operating condition;
- identify the automotive message, associating the first and the second operating states of said predefined automotive device (4) with the relevant data field read during the first and second automotive operating conditions, respectively, and associating said predefined automotive device (4) with the relevant identifier field.

2. A datalogger according to claim 1, configured to read the automotive messages transmitted over the CAN bus (3) and store the read automotive messages corresponding to at least one identified automotive message at predefined intervals and/or on the basis of a command.

3. A datalogger according to claims 1 or 2, configured to supply, upon command, a previously identified automotive message on the CAN bus (3) to cause an electronic control unit (2), following reception of the automotive message, to control the automotive device (4) associated with the identifier field of the received automotive message to make it function according to the operation encoded in the data field of the received automotive message.

4. A datalogger according to claim 3, configured to receive said command from a user control device (20) via a wireless communications system; the user control device (20) comprising a portable apparatus comprising a a user control interface.

5. A datalogger according to claim 1, further configured to communicate information to a user regarding both the determined automotive device (4) to operate, and the operation/action to perform on it to cause the automotive device (4) to pass from the first to the second operating state so as to cause passage from the first to the second automotive operating condition.

6. A datalogger according to claim 1, comprising a memory unit (8) and being further configured to:
- store information regarding the previously identified automotive message in said memory unit (8);
- build a database (9) containing one or more identified messages, in which each identified message is unambiguously associated with the operation of an identified automotive device (4) in the first or the second automotive operating conditions.

7. A datalogger according to claim 6, wherein each identified automotive message contained in the database (9) is encoded to include the identifier field indicating said automotive device (4), the data field indicating the operation of the automotive device (4) in the first operating condition and the data field indicating the operation of the automotive device (4) in the second operating condition.

8. A datalogger according to claim 7, further configured to repeat, in a sequential, ordered and cyclic manner, the operations carried out for identification of the automotive messages associated with a plurality of automotive devices (4), in which, during each identification, the self-learning automotive data logger (6) reads the automotive messages in both the first operating condition and in the second automotive operating condition, so as to be able to identify the automotive messages on the basis of the transition of the bits in the data field of the identified automotive message.

9. A datalogger according to claim 1, configured such that after the identification of one or more automotive messages, it reads the automotive messages transmitted over the CAN bus (3), differentiates one or more automotive messages identified in the self-learning step from the automotive messages read and stores them in a database.

10. A method to identify, by means of a self-learning automotive data logger, the automotive messages transmitted over at least one CAN bus (3) connecting at least two electronic control units (2) associated with respective automotive systems present on the vehicle (1) comprising at least one automotive device (4),
said method comprising the steps of:
- connecting said self-learning automotive data logger to the CAN bus (3) of the vehicle (1);
and performing by means of said by said self-learning automotive data logger the steps of:
- reading, on the CAN bus (3), the automotive messages generated by said automotive electronic control units (2) and transmitted over the CAN bus (3);
- detecting, amongst the automotive messages read, an automotive message that has changed due to a certain transition in the operating status of a predefined automotive device (4); and
- identifying the content of the automotive message so as to self-learn said content, on the basis of said change in the detected automotive message, and the operating states entered by automotive device during said transition;
said method being **characterized by** further comprising the steps of performing by means of said self-learning automotive data logger the steps of:
- reading the automotive messages transmitted over said CAN bus (3) in a first automotive operating condition, wherein said predefined automotive device (4) is in a first predefined operating state, while the remaining automotive devices (4) operate in corresponding predefined operating states;
- communicating to a user a predefined action that user has to carry out on said predefined automotive device (4) to make the predefined automotive device (4) pass from the first to the second operating state;
- reading the automotive messages transmitted over the CAN bus (3) in a second automotive operating condition, wherein the predefined automotive device (4) has passed to a second predefined operating state, while the operating states of the remaining automotive devices (4) have remained unchanged with respect to said first automotive operating condition;
- determining, from amongst the automotive messages read in the first and the second automotive operating condition, an automotive message having a data field found to have changed during the transition from the first to the second automotive operating condition; and
- identifying the automotive message associating the first and the second operating states of said predefined automotive device (4) with the relevant data field read during the first and second automotive operating conditions, respectively, and associating said predefined automotive device (4) with the relevant identifier field.

11. A method according to claim 10, further comprising the step of communicating information to a user regarding both the determined automotive device (4) to operate, and the operation/action to perform on it to cause the automotive device (4) to pass from the first to the second operating state so as to cause passage from the first to the second automotive operating condition.

12. A method according to claims 10 or 11 comprising:
- storing information regarding the previously identified automotive message a memory unit (8);
- building a database (9) containing one or more identified messages, in which each identified message is unambiguously associated with the operation of an identified automotive device (4) in the first or the second automotive operating conditions.

13. A method according to claims 10, comprising the step of repeating, in a sequential, ordered and cyclic manner, the operations carried out for identification of the automotive messages associated with a plurality of automotive devices (4), in which, during each identification, the self-learning automotive data logger (6) reads the automotive messages in both the first operating condition and in the second automotive operating condition, so as to be able to identify the automotive messages on the basis of the transition of the bits in the data field of the identified automotive message.

14. A method according to claim 10, comprising the steps of:
- transmitting, by means of a user control device, a control command for said predefined automotive device;
- receiving through said datalogger (6), said control command, and determining an automotive message associated with the operation of the predefined automotive device contained in said control command;
- transmitting the automotive message on the CAN bus to cause an electronic control unit to control the automotive device (4) associated with the identifier field of the received automotive message to make it function according to the operation encoded in the data field of the automotive message.

15. Use of a self-learning automotive data logger (6) to identify the content of automotive messages transmitted over at least one CAN bus (3) connecting at least two electronic control units (2) associated with respective automotive systems present on the vehicle (1), each comprising at least one automotive device (4); said self-learning automotive data logger (6) being **characterized in that** it is configured according to any of claims 1 to 9.

## Patentansprüche

1. Selbstlernender Automobildatenlogger (6), der ausgestaltet ist, den Inhalt von Automobilnachrichten zu identifizieren, die über mindestens einen CAN-Bus (3) übertragen werden, der mindestens zwei elektronische Automobilsteuereinheiten (2) verbindet, die entsprechenden Automobilsystemen zugehörig sind, die an dem Fahrzeug (1) vorhanden sind, das mindestens eine Automobilvorrichtung (4) umfasst;
wobei der selbstlernende Automobildatenlogger (6) ausgestaltet ist, mit dem CAN-Bus (3) verbunden zu sein, und Folgendes umfasst:
- Benutzeroberflächenmittel (7), die ausgestaltet sind, Informationen für den Benutzer zu erzeugen;
wobei der selbstlernende Automobildatenlogger (6) für Folgendes ausgestaltet ist:
- Lesen der durch die elektronischen Automobilsteuereinheiten (2) erzeugten und über den CAN-Bus (3) übertragenen Automobilnachrichten auf dem CAN-Bus (3);
- Erfassen einer Automobilnachricht unter den gelesenen Automobilnachrichten, die sich aufgrund eines bestimmten Übergangs im Betriebszustand einer Automobilvorrichtung (4) geändert hat; und
- Identifizieren des Inhalts der erfassten Automobilnachricht, um den Inhalt selbst zu lernen, auf der Grundlage der Änderung in der Automobilnachricht und den Betriebszuständen der Automobilvorrichtung (4) während des Übergangs;
wobei der selbstlernende Automobildatenlogger **dadurch gekennzeichnet ist, dass** er überdies für Folgendes ausgestaltet ist:
- Lesen der über den CAN-Bus (3) übertragenen Automobilnachrichten in einer ersten Automobilbetriebsbedingung, wobei die vordefinierte Automobilvorrichtung (4) sich in einem ersten vordefinierten Betriebszustand befindet, während die übrigen Automobilvorrichtungen (4) in entsprechenden vordefinierten Betriebszuständen betrieben werden;
- Kommunizieren einer vordefinierten Handlung, die der Benutzer auf der vordefinierten Automobilvorrichtung (4) durchführen muss, um zu bewirken, dass die vordefinierte Automobilvorrichtung (4) von dem ersten Betriebszustand in einen zweiten Betriebszustand übergeht, durch die Benutzeroberflächenmittel (7) an einen Benutzer;
- Lesen der über den CAN-Bus (3) in einem zweiten Automobilbetriebszustand übertragenen Automobilnachrichten, wobei die vordefinierte Automobilvorrichtung (4) aufgrund der Handlung des Benutzers in einen zweiten vordefinierten Betriebszustand übergegangen ist, während die Betriebszustände der übrigen Automobilvorrichtungen (4) in Bezug auf den ersten Automobilbetriebszustand unverändert geblieben sind;
- Bestimmen einer Automobilnachricht unter den in den ersten und den zweiten Automobilbetriebsbedingungen gelesenen Automobilnachrichten, die ein Datenfeld aufweist, bei dem festgestellt wurde, dass es sich während des Übergangs von der ersten in die zweite Automobilbetriebsbedingung geändert hat;
- Identifizieren der Automobilnachricht durch Verknüpfen des ersten und des zweiten Betriebszustands der vordefinierten Automobilvorrichtung (4) mit dem relevanten, während der ersten beziehungsweise der zweiten Automobilbetriebsbedingungen gelesenen Datenfeld und Verknüpfen der vordefinierten Automobilvorrichtung (4) mit dem relevanten Kennungsfeld.

2. Datenlogger nach Anspruch 1, der ausgestaltet ist, die über den CAN-Bus (3) übertragenen Automobilnachrichten zu lesen und die gelesenen Automobilnachrichten, die mindestens einer identifizierten Automobilnachricht entsprechen, in vordefinierten Intervallen und/oder auf der Grundlage eines Befehls zu speichern.

3. Datenlogger nach Anspruch 1 oder 2, der ausgestaltet ist, auf Befehl eine vorhergehend identifizierte Automobilnachricht auf dem CAN-Bus (3) zu liefern, um zu bewirken, dass eine elektronische Steuereinheit (2) im Anschluss an den Empfang der Automobilnachricht die Automobilvorrichtung (4), die dem Kennungsfeld der empfangenen Automobilnachricht zugehörig ist, steuert, um sie gemäß dem in dem Datenfeld der empfangenen Automobilnachricht codierten Betrieb arbeiten zu lassen.

4. Datenlogger nach Anspruch 3, der ausgestaltet ist, den Befehl von einer Benutzersteuervorrichtung (20) über ein drahtloses Kommunikationssystem zu empfangen; wobei die Benutzersteuervorrichtung (20) eine tragbare Einrichtung umfasst, die eine Benutzersteueroberfläche umfasst.

5. Datenlogger nach Anspruch 1, der überdies ausgestaltet ist, Informationen an einen Benutzer zu kommunizieren, die sowohl die bestimmte zu betreibende Automobilvorrichtung (4) als auch den/die Betrieb/Handlung betreffen, der/die darauf durchzuführen ist, um zu bewirken, dass die Automobilvorrichtung (4) von dem ersten in den zweiten Betriebszustand übergeht, um den Übergang von der ersten in die zweite Automobilbetriebsbedingung zu bewirken.

6. Datenlogger nach Anspruch 1, der eine Speichereinheit (8) umfasst und überdies für Folgendes ausgestaltet ist:
- Speichern von Informationen, die die vorhergehend identifizierte Automobilnachricht betreffen, in der Speichereinheit (8);
- Aufbauen einer Datenbank (9), die eine oder mehrere identifizierte Nachrichten enthält, in der die identifizierte Nachricht unzweideutig mit dem Betrieb einer identifizierten Automobilvorrichtung (4) in den ersten oder den zweiten Automobilbetriebsbedingungen verknüpft ist.

7. Datenlogger nach Anspruch 6, wobei jede identifizierte Automobilnachricht, die in der Datenbank (9) enthalten ist, codiert ist, um das Kennungsfeld zu umfassen, das die Automobilvorrichtung (4) angibt, wobei das Datenfeld den Betrieb der Automobilvorrichtung (4) in der ersten Betriebsbedingung angibt und das Datenfeld den Betrieb der Automobilvorrichtung (4) in der zweiten Betriebsbedingung angibt.

8. Datenlogger nach Anspruch 7, der überdies ausgestaltet ist, die zur Identifizierung der mit einer Vielzahl von Automobilvorrichtungen (4) verknüpften Automobilnachrichten durchgeführten Arbeitsvorgänge in einer aufeinanderfolgenden, geordneten und zyklischen Art und Weise zu wiederholen, wobei der selbstlernende Automobildatenlogger (6) während jeder Identifizierung die Automobilnachrichten in sowohl der ersten Betriebsbedingung als auch in der zweiten Automobilbetriebsbedingung liest, um in der Lage zu sein, die Automobilnachrichten auf der Grundlage des Übergangs der Bits in dem Datenfeld der identifizierten Automobilnachricht zu identifizieren.

9. Datenlogger nach Anspruch 1, der derart ausgestaltet ist, dass er nach der Identifizierung von einer oder mehreren Automobilnachrichten die über den CAN-Bus (3) übertragenen Automobilnachrichten liest, eine oder mehrere in dem Selbstlernschritt identifizierte Automobilnachrichten von den gelesenen Automobilnachrichten differenziert und sie in einer Datenbank speichert.

10. Verfahren zum Identifizieren der Automobilnachrichten, die über mindestens einen CAN-Bus (3) übertragen werden, der mindestens zwei elektronische Steuereinheiten (2) verbindet, die entsprechenden Automobilsystemen zugehörig sind, die auf dem Fahrzeug (1) vorhanden sind, das mindestens eine Automobilvorrichtung (4) umfasst, mittels eines selbstlernenden Automobildatenloggers,
wobei das Verfahren die folgenden Schritte umfasst:
- Verbinden des selbstlernenden Automobildatenloggers mit dem CAN-Bus (3) des Fahrzeugs (1);
und Durchführen der folgenden Schritte mittels des selbstlernenden Automobildatenloggers:
- Lesen der durch die elektronischen Automobilsteuereinheiten (2) erzeugten und über den CAN-Bus (3) übertragenen Automobilnachrichten auf dem CAN-Bus (3);
- Erfassen einer Automobilnachricht unter den gelesenen Automobilnachrichten, die sich aufgrund eines bestimmten Übergangs im Betriebszustand einer vordefinierten Automobilvorrichtung (4) geändert hat; und
- Identifizieren des Inhalts der Automobilnachricht, um den Inhalt selbst zu lernen, auf der Grundlage der Änderung in der erfassten Automobilnachricht und den Betriebszuständen, in die die Automobilvorrichtung während des Übergangs eingetreten ist;
wobei das Verfahren **dadurch gekennzeichnet ist, dass** es überdies die Schritte zum Durchführen der folgenden Schritte mittels des selbstlernenden Automobildatenloggers umfasst:
- Lesen der über den CAN-Bus (3) übertragenen Automobilnachrichten in einer ersten Automobilbetriebsbedingung, wobei die vordefinierte Automobilvorrichtung (4) sich in einem ersten vordefinierten Betriebszustand befindet, während die übrigen Automobilvorrichtungen (4) in entsprechenden vordefinierten Betriebszuständen betrieben werden;
- Kommunizieren einer vordefinierten Handlung, die der Benutzer auf der vordefinierten Automobilvorrichtung (4) durchführen muss, um zu bewirken, dass die vordefinierte Automobilvorrichtung (4) von dem ersten in den zweiten Betriebszustand übergeht, an einen Benutzer;
- Lesen der über den CAN-Bus (3) in einem zweiten Automobilbetriebszustand übertragenen Automobilnachrichten, wobei die vordefinierte Automobilvorrichtung (4) in einen zweiten vordefinierten Betriebszustand übergegangen ist, während die Betriebszustände der übrigen Automobilvorrichtungen (4) in Bezug auf den ersten Automobilbetriebszustand unverändert geblieben sind;
- Bestimmen einer Automobilnachricht unter den in den ersten und den zweiten Automobilbetriebsbedingungen gelesenen Automobilnachrichten, die ein Datenfeld aufweist, bei dem festgestellt wurde, dass es sich während des Übergangs von der ersten in die zweite Automobilbetriebsbedingung geändert hat; und
- Identifizieren der Automobilnachricht durch Verknüpfen des ersten und des zweiten Betriebszustands der vordefinierten Automobilvorrichtung (4) mit dem relevanten, während der ersten beziehungsweise der zweiten Automobilbetriebsbedingungen gelesenen Datenfeld und Verknüpfen der vordefinierten Automobilvorrichtung (4) mit dem relevanten Kennungsfeld.

11. Verfahren nach Anspruch 10, das überdies den Schritt zum Kommunizieren von Informationen an einen Benutzer umfasst, die sowohl die bestimmte zu betreibende Automobilvorrichtung (4) als auch den/die Betrieb/Handlung betrifft, der/die darauf durchzuführen ist, um zu bewirken, dass die Automobilvorrichtung (4) von dem ersten in den zweiten Betriebszustand übergeht, um den Übergang von der ersten in die zweite Automobilbetriebsbedingung zu bewirken.

12. Verfahren nach Anspruch 10 oder 11, das Folgendes umfasst:
- Speichern von Informationen, die die vorhergehend identifizierte Automobilnachricht betreffen, in einer Speichereinheit (8);
- Aufbauen einer Datenbank (9), die eine oder mehrere identifizierte Nachrichten enthält, in der die identifizierte Nachricht unzweideutig mit dem Betrieb einer identifizierten Automobilvorrichtung (4) in den ersten oder den zweiten Automobilbetriebsbedingungen verknüpft ist.

13. Verfahren nach Anspruch 10, das den Schritt zum Wiederholen der zur Identifizierung der mit einer Vielzahl von Automobilvorrichtungen (4) verknüpften Automobilnachrichten durchgeführten Arbeitsvorgänge in einer aufeinanderfolgenden, geordneten und zyklischen Art und Weise umfasst, wobei der selbstlernende Automobildatenlogger (6) während jeder Identifizierung die Automobilnachrichten in sowohl der ersten Betriebsbedingung als auch in der zweiten Automobilbetriebsbedingung liest, um in der Lage zu sein, die Automobilnachrichten auf der Grundlage des Übergangs der Bits in dem Datenfeld der identifizierten Automobilnachricht zu identifizieren.

14. Verfahren nach Anspruch 10, das die folgenden Schritte umfasst:
- Übertragen eines Steuerbefehls für die vordefinierte Automobilvorrichtung mittels einer Benutzersteuervorrichtung;
- Empfangen des Steuerbefehls durch den Datenlogger (6) und Bestimmen einer Automobilnachricht, die dem Betrieb der vordefinierten Automobilvorrichtung zugehörig ist, die in dem Steuerbefehl enthalten ist;
- Übertragen der Automobilnachricht auf dem CAN-Bus, um zu bewirken, dass eine elektronische Steuereinheit die Automobilvorrichtung (4), die dem Kennungsfeld der empfangenen Automobilnachricht zugehörig ist, steuert, um sie gemäß dem in dem Datenfeld der Automobilnachricht codierten Betrieb arbeiten zu lassen.

15. Verwendung eines selbstlernenden Automobildatenloggers (6) zum Identifizieren des Inhalts von Automobilnachrichten, die über mindestens einen CAN-Bus (3) übertragen werden, der mindestens zwei elektronische Steuereinheiten (2) verbindet, die den entsprechenden Automobilsystemen zugehörig sind, die auf dem Fahrzeug (1) vorhanden sind, wobei jedes mindestens eine Automobilvorrichtung (4) umfasst; wobei der selbstlernende Automobildatenlogger (6) **dadurch gekennzeichnet ist, dass** er nach einem der Ansprüche 1 bis 9 ausgestaltet ist.

## Revendications

1. Enregistreur de données automobiles à auto-apprentissage (6) configuré pour identifier le contenu de messages automobiles transmis sur au moins un bus CAN (3) connectant au moins deux unités de commande électronique automobiles (2) associées à des systèmes automobiles respectifs présents sur le véhicule (1) comprenant au moins un dispositif automobile (4) ;
ledit enregistreur de données automobiles à auto-apprentissage (6) étant conçu pour être connecté audit bus CAN (3) et comprenant :
- un moyen d'interface utilisateur (7) conçu pour générer des informations à destination de l'utilisateur ;
ledit enregistreur de données automobiles à auto-apprentissage (6) étant configuré pour :
- lire, sur le bus CAN (3), les messages automobiles générés par lesdites unités de commande électronique automobiles (2) et transmis sur le bus CAN (3) ;
- détecter, parmi les messages automobiles lus, un message automobile qui a changé en raison d'une transition déterminée dans l'état opérationnel d'un dispositif automobile (4) ; et
- identifier le contenu du message automobile détecté de manière à auto-apprendre ledit contenu, sur la base du changement dans le message automobile et des états opérationnels dudit dispositif automobile (4) pendant ladite transition ;
ledit enregistreur de données automobiles à auto-apprentissage étant **caractérisé en ce qu'**il est en outre configuré pour :
- lire les messages automobiles transmis sur ledit bus CAN (3) dans une première condition opérationnelle automobile, dans laquelle ledit dispositif automobile (4) prédéfini est dans un premier état opérationnel prédéfini, tandis que les dispositifs automobiles (4) restants fonctionnent dans des états opérationnels prédéfinis correspondants ;
- communiquer à un utilisateur, par ledit moyen d'interface utilisateur (7), une action prédéfinie qu'un utilisateur doit mettre en oeuvre sur ledit dispositif automobile (4) prédéfini pour amener le dispositif automobile (4) prédéfini à passer du premier état opérationnel à un deuxième état opérationnel ;
- lire les messages automobiles transmis sur le bus CAN (3) dans une deuxième condition opérationnelle automobile, dans laquelle le dispositif automobile (4) prédéfini est passé dans un deuxième état opérationnel prédéfini en raison de l'action de l'utilisateur, tandis que les états opérationnels des dispositifs automobiles (4) restants sont restés inchangés par rapport à ladite première condition opérationnelle automobile ;
- déterminer, parmi les messages automobiles lus dans les première et deuxième conditions opérationnelles automobiles, un message automobile ayant un champ de données qui se révèle avoir changé pendant la transition de la première à la deuxième condition opérationnelle automobile ;
- identifier le message automobile, associant les premier et deuxième états opérationnels dudit dispositif automobile (4) prédéfini au champ de données pertinent lu pendant les première et deuxième conditions opérationnelles automobiles, respectivement, et associant ledit dispositif automobile (4) prédéfini audit champ identifiant pertinent.

2. Enregistreur de données selon la revendication 1, configuré pour lire les messages automobiles transmis sur le bus CAN (3) et stocker les messages automobiles lus correspondant à au moins un message automobile identifié, à des intervalles prédéfinis et/ou sur la base d'une instruction.

3. Enregistreur de données selon la revendication 1 ou 2, configuré pour fournir, sur instruction, un message automobile identifié précédemment sur le bus CAN (3) pour amener une unité de commande électronique (2), à la suite de la réception du message automobile, à commander le dispositif automobile (4) associé au champ identifiant du message automobile reçu de façon à le faire fonctionner selon le fonctionnement codé dans le champ de données du message automobile reçu.

4. Enregistreur de données selon la revendication 3, configuré pour recevoir ladite instruction en provenance d'un dispositif de commande utilisateur (20) via un système de communication sans fil ; le dispositif de commande utilisateur (20) comprenant un appareil portable comprenant une interface de commande utilisateur.

5. Enregistreur de données selon la revendication 1, configuré en outre pour communiquer des informations à un utilisateur en ce qui concerne à la fois le dispositif automobile (4) déterminé à faire fonctionner, et l'opération/l'action à effectuer dessus pour amener le dispositif automobile (4) à passer du premier au deuxième état opérationnel de manière à amener le passage de la première à la deuxième condition opérationnelle automobile.

6. Enregistreur de données selon la revendication 1, comprenant une unité de mémoire (8) et étant en outre configuré pour :
- stocker des informations concernant le message automobile identifié précédemment dans ladite unité de mémoire (8) ;
- créer une base de données (9) contenant un ou plusieurs messages identifiés, dans laquelle chaque message identifié est associé sans ambiguïté au fonctionnement d'un dispositif automobile (4) identifié dans la première ou la deuxième condition opérationnelle automobile.

7. Enregistreur de données selon la revendication 6, dans lequel chaque message automobile identifié contenu dans la base de données (9) est codé pour inclure le champ identifiant indiquant ledit dispositif automobile (4), le champ de données indiquant le fonctionnement du dispositif automobile (4) dans la première condition opérationnelle et le champ de données indiquant le fonctionnement du dispositif automobile (4) dans la deuxième condition opérationnelle.

8. Enregistreur de données selon la revendication 7, configuré en outre pour répéter, d'une manière séquentielle, ordonnée et cyclique, les opérations mises en oeuvre pour l'identification des messages automobiles associés à une pluralité de dispositifs automobiles (4), où, pendant chaque identification, l'enregistreur de données automobiles à auto-apprentissage (6) lit les messages automobiles à la fois dans la première condition opérationnelle et dans la deuxième condition opérationnelle automobile, de manière à être en mesure d'identifier les messages automobiles sur la base de la transition des bits dans le champ de données du message automobile identifié.

9. Enregistreur de données selon la revendication 1, configuré de telle sorte que, après l'identification d'un ou plusieurs messages automobiles, il lit les messages automobiles transmis sur le bus CAN (3), différencie un ou plusieurs messages automobiles identifiés lors de l'étape d'auto-apprentissage à partir des messages automobiles lus et les stocke dans une base de données.

10. Procédé pour identifier, au moyen d'un enregistreur de données automobiles à auto-apprentissage, les messages automobiles transmis sur au moins un bus CAN (3) connectant au moins deux unités de commande électronique (2) associées à des systèmes automobiles respectifs présents sur le véhicule (1) comprenant au moins un dispositif automobile (4),
ledit procédé comprenant les étapes consistant à :
- connecter ledit enregistreur de données automobiles à auto-apprentissage au bus CAN (3) du véhicule (1) ;
et effectuer au moyen dudit par ledit enregistreur de données automobiles à auto-apprentissage les étapes consistant à :
- lire, sur le bus CAN (3), les messages automobiles générés par lesdites unités de commande électronique automobiles (2) et transmis sur le bus CAN (3) ;
- détecter, parmi les messages automobiles lus, un message automobile qui a changé en raison d'une certaine transition dans l'état opérationnel d'un dispositif automobile (4) prédéfini ; et
- identifier le contenu du message automobile de manière à auto-apprendre ledit contenu, sur la base dudit changement dans le message automobile détecté, et des états opérationnels entrés par le dispositif automobile pendant ladite transition ;
ledit procédé étant **caractérisé en ce qu'**il comprend en outre les étapes consistant à effectuer au moyen dudit enregistreur de données automobiles à auto-apprentissage les étapes consistant à :
- lire les messages automobiles transmis sur ledit bus CAN (3) dans une première condition opérationnelle automobile, dans laquelle ledit dispositif automobile (4) prédéfini est dans un premier état opérationnel prédéfini, tandis que les dispositifs automobiles (4) restants fonctionnent dans des états opérationnels prédéfinis correspondants ;
- communiquer à un utilisateur une action prédéfinie qu'un utilisateur doit mettre en oeuvre sur ledit dispositif automobile (4) prédéfini pour faire passer le dispositif automobile (4) prédéfini du premier au deuxième état opérationnel ;
- lire les messages automobiles transmis sur le bus CAN (3) dans une deuxième condition opérationnelle automobile, dans laquelle le dispositif automobile (4) prédéfini est passé dans un deuxième état opérationnel prédéfini, tandis que les états opérationnels des dispositifs automobiles (4) restants sont restés inchangés par rapport à ladite première condition opérationnelle automobile ;
- déterminer, parmi les messages automobiles lus dans les première et deuxième conditions opérationnelles automobiles, un message automobile ayant un champ de données qui se révèle avoir changé pendant la transition de la première à la deuxième condition opérationnelle automobile ;
- identifier le message automobile associant le premier et le deuxième état opérationnel dudit dispositif automobile (4) prédéfini au champ de données pertinent lu pendant les première et deuxième conditions opérationnelles automobiles, respectivement, et associant ledit dispositif automobile (4) prédéfini au champ identifiant pertinent.

11. Procédé selon la revendication 10, comprenant en outre l'étape consistant à communiquer des informations à un utilisateur en ce qui concerne à la fois le dispositif automobile (4) déterminé à faire fonctionner, et l'opération/l'action à effectuer dessus pour amener le dispositif automobile (4) à passer du premier au deuxième état opérationnel de manière à amener le passage de la première à la deuxième condition opérationnelle automobile.

12. Procédé selon la revendication 10 ou 11 comprenant :
- le stockage d'informations concernant le message automobile identifié précédemment, dans une unité de mémoire (8) ;
- la création d'une base de données (9) contenant un ou plusieurs messages identifiés, dans laquelle chaque message identifié est associé sans ambiguïté au fonctionnement d'un dispositif automobile (4) identifié dans la première ou la deuxième condition opérationnelle automobile.

13. Procédé selon la revendication 10, comprenant l'étape consistant à répéter, d'une manière séquentielle, ordonnée et cyclique, les opérations mises en oeuvre pour l'identification des messages automobiles associés à une pluralité de dispositifs automobiles (4), où, pendant chaque identification, l'enregistreur de données automobiles à auto-apprentissage (6) lit les messages automobiles à la fois dans la première condition opérationnelle et dans la deuxième condition opérationnelle automobile, de manière à être en mesure d'identifier les messages automobiles sur la base de la transition des bits dans le champ de données du message automobile identifié.

14. Procédé selon la revendication 10, comprenant les étapes consistant à :
- transmettre, au moyen d'un dispositif de commande utilisateur, une instruction de commande pour ledit dispositif automobile prédéfini ;
- recevoir par le biais dudit enregistreur de données (6) ladite instruction de commande, et déterminer un message automobile associé au fonctionnement du dispositif automobile prédéfini contenu dans ladite instruction de commande ;
- transmettre le message automobile sur le bus CAN pour amener une unité de commande électronique à commander le dispositif automobile (4) associé au champ identifiant du message automobile reçu de façon à le faire fonctionner selon le fonctionnement codé dans le champ de données du message automobile.

15. Utilisation d'un enregistreur de données automobiles à auto-apprentissage (6) pour identifier le contenu de messages automobiles transmis sur au moins un bus CAN (3) connectant au moins deux unités de commande électronique (2) associées à des systèmes automobiles respectifs présents sur le véhicule (1), comprenant chacun au moins un dispositif automobile (4) ; ledit enregistreur de données automobiles à auto-apprentissage (6) étant **caractérisé en ce qu'**il est configuré selon l'une quelconque des revendications 1 à 9.
